# EUROPEAN PATENT APPLICATION

(11) **EP 4 822 641 A1**
(43) Date of publication of application: **14.10.2026**
(21) Application number: 25305511.5
(22) Date of filing: 09.04.2025
(51) Int. Cl.: G06T 7/00

(54) **METHOD AND SYSTEM FOR DETECTING SIGNS OF STRUGGLE IN INFANTS FROM VIDEO ANALYSIS**

(71) Applicant: Assistance Publique - Hôpitaux de Paris, 75012 Paris (FR); UNIVERSITE DE VERSAILLES-SAINT QUENTIN EN YVELINES, 78035 Versailles cedex (FR)
(72) Inventor: BERGOUNIOUX, Jean, 94270 Le Kremlin-Bicêtre (FR); MARO, Katarina, 93600 Aulnay-sous-Bois (FR)
(74) Representative: IPAZ

(57) **Abstract**

The invention concerns a method for detecting synchronization between thoracic movements and abdominal movements of a patient from a video displaying at least the thorax and abdomen of the patient. The method makes it possible to locate the patient's anatomy, determine the exact position of their joints and limbs, make a contour, examine the thoracic expansion and abdominal expansion, measure them and check their synchronization.

## Description

### Domain of the invention

The present invention relates to an image processing method for detecting synchronization between thoracic movements and abdominal movements of a patient.

### Background of the invention

Children represent 30% of the world's population and 5 million of them die every year, that is to say 14,000 who die every day. While the evolution of infant mortality has progressed in an absolutely incontestable way over the last 20 years, with a decrease of almost half, it remains a major concern in developing countries but also in developed countries. Indeed, France has seen its infant mortality increase over the last 12 years by almost 7%, bringing it to 22nd place among European countries. Infant mortality is a marker of development but remains a constant societal concern regardless of the country's level of development.

The leading cause of death in children under five is lower respiratory infections. Children under five are particularly susceptible to this type of infection. In fact, respiratory capacity will evolve in the first years of life and develop until the age of 20. The number of pulmonary alveoli, which are the structures that allow gas exchange between the outside air and the blood, will multiply significantly in the first years of life and continue to develop in number and structural complexity until the age of 20. The anatomy of the thorax and its compliance are less favorable to effort before the age of five. The diaphragm, the main muscle of respiration in children, is in a less favorable horizontal configuration than it will be in adulthood and is mainly made up of fibers allowing a rapid response and much fewer fibers allowing a sustained effort as is the case for adults. Finally, and to finish, the child's airways, that is to say the trachea and the bronchi which allow air to be brought to the lungs, are of a reduced caliber. This small caliber is responsible for a very particular fragility to lower respiratory infections. Indeed, 1 mm of edema in the child's airways will multiply the resistances by 16 when the same edema will only multiply them by three in an adult individual.

Children under five years of age therefore have a particular fragility due to the absence of respiratory reserve and the reduced size of their airway. Any damage to the pulmonary parenchyma will lead much more quickly than in adults to an abnormality in gas exchanges which can threaten the child's life. This same damage to the pulmonary parenchyma will lead to a change in the compliance of the pulmonary tissue which will require greater respiratory work which the patient will not be able to sustain given the physiological particularities set out above. Finally, the change in the caliber of the airways, linked to the overall inflammation of the respiratory system, will also lead to a considerable increase in the respiratory work necessary to maintain gas exchanges, thus contributing to the patient's exhaustion. The essential element that will eventually lead to the death of these patients is the lack of oxygen or hypoxia, which will occur by two main mechanisms: the alteration of gas exchanges due to the damage to the alveoli themselves in low number and/or muscular exhaustion linked to the modification of pulmonary compliance and increased resistance of the airways. The vast majority of diseases responsible for infant mortality are accessible to treatment. The vast majority of treatments that would prevent infant mortality are technically and financially accessible across most of the globe. This is the paradox of infant mortality, which in the majority of cases is linked to a lack of diagnosis, an erroneous diagnosis, a diagnosis that is too late or, and this is very often the case, a poor assessment of the severity of the child's respiratory condition. The major obstacle to reducing this infant mortality and improving the condition of children therefore involves wider access to precise and reliable diagnostic assessment.

An object of the present invention is to propose a new tool to aid in a good diagnosis.

Another object of the invention is to propose a general public screening system allowing any user to have a rapid and reliable assessment of a person's respiratory function.

### Disclosure of the invention

These and other objects of the present invention are substantially achieved by providing an image processing method for detecting synchronization between thoracic movements and abdominal movements of a patient from a video displaying at least the thorax and abdomen of the patient.

This method is implemented by a processing unit and comprises the following steps:
- for each image of the video:
- detection of the patient's contour,
- extraction of a skeleton of the patient comprising at least the coordinates of the left shoulder, the right shoulder, the left hip and the right hip,
- determination of a dividing line between the shoulders and the hips; all or part of an upper surface delimited by the dividing line, the contour and an upper line passing through the shoulders constitutes a thoracic surface; all or part of a lower surface delimited by the dividing line, the contour and a lower line passing through the hips constitutes an abdominal surface,
- calculation of an area of the thoracic surface and an area of the abdominal surface,
- for a series of images of the video:
- determination of a thoracic signal and an abdominal signal representing respectively the variation of the area of the thoracic surface and the variation of the area of the abdominal surface, and
- calculation of a relative continuous phase between the thoracic signal and the abdominal signal so as to determine the level of synchronization between the thoracic surface and the abdominal surface.

The invention is particularly remarkable in that it allows an analysis of the respiratory rhythm by following the evolution of the surface of the rib cage in relation to the surface of the abdomen from the images of a video. The analysis of the synchrony or asynchrony between thoracic movements and abdominal movements is for example one of the fundamental elements in the identification of signs of struggle in infants. What's more, specific analysis of the mechanical deformation of the various segments enables us to assess the patient's level of respiratory distress very precisely, and in many cases to evoke a diagnosis with 1° high sensitivity and specificity.

In other words, the present invention makes it possible to determine the respiratory rate and to analyze the synchronization or asynchrony that exists between the thoracic movements and the abdominal movements, movements that are one of the fundamental elements of the signs of struggle that represents the respiratory work of a patient. With a simple video of for example one minute on a plain background, it is possible to analyze very precisely the respiratory function of a child. This would make it possible for example to determine the degree of respiratory failure in a child during a lower respiratory infection. The video can be a two-dimensional video acquired with a consumer system such as a smartphone or webcam. However, it makes it possible to analyze very precisely the variations in the thoracic diameter and the abdominal diameter. The present invention is a medical tool, in the same way as a thermometer for example, making it possible to detect a level of the respiratory function of a child or an adult from consumer equipment.

If respiratory distress is subsequently observed, urgent measures must be implemented regardless of the etiology: ensure a free airway, place in a sloping or 1/2 seated position and provide oxygen for an oxygen saturation > 95% or 92% if there are signs of struggle. Signs of severity are polypnea > 60/min, saturation < 92%, bradypnea, irregular respiratory rate, signs of intense struggle, inability to speak, cyanosis, pallor, sweating, hemodynamic disorders (CRT > 3 s, tachycardia, hepatomegaly, hypertension), agitation, impaired consciousness, food repercussions.

The present invention makes it possible to analyze the thoracic and abdominal shapes time dependent deformation through respiratory cycles allowing to calculate the respiratory frequency, the respiratory rhythm, the lung compliance, the diaphragmatic work, the respiratory load, the inspiration and expiration time ratios and slope and to characterize specific breathing patterns characteristic of specific diseases. For example, following analysis can be carried out:
- Analysis of the respiratory frequency, the respiratory rhythm.
- Analysis of thoracic wall displacement speed during inspiration and expiration and the slope calculation for indirect assessment of thoraco-pulmonary compliance.
- Analysis of thoracic wall displacement speed during inspiration and expiration and the slope calculation for indirect assessment of asymmetrical damage.
- Analysis of thoracic wall deformation along the cranial-caudal axis, to assess diaphragmatic workload;
- Analysis of thoracic wall deformation symmetry, to suspect asymmetrical parenchymal damage.
- Analysis of the inspiration and expiration time ratios and speed and slope of those inspiration and expiration times.
- Analysis of the distance and configuration between the Hip and the shoulder points and segments.
- Multiparametric analysis to define a specific respiratory pattern for a particular disease. This multi-parametric analysis includes an analysis of the variation in thoracic and abdominal surfaces, a comparison of the variation in these surfaces, an analysis of the respective velocities of these two surfaces as well as the respective slope of each part at the moment of inspiration and at the moment of expiration, a combined analysis of these velocities, slopes, an analysis of the thoracic parietal deformation in the cranio-caudal axis, an analysis of the respiratory frequency, and an analysis of the overall mobility of the child or subject. One specific analysis of synchronization and its evolution over time, in terms of frequency, speed and slope, inspiration and expiration time ratio will complete this analysis.
- This analysis can be complemented by anthropometric data such as age, weight and any previous history, to refine the search for specific patterns.

According to an embodiment of the invention, the method can comprise a step of removing the background before the step of detecting the contour of the patient. We can therefore use a U2Net technique on each image. U2Net is a known model that is designed for salient object detection.

Background removal allows for a plain background. From the image without background, the patient's contours can be identified in each image after having previously binarized each image, which improves the quality of contour detection.

According to an embodiment of the invention, the extraction step can consist in extracting a set of parameters of the skeleton, said parameters comprising articulation points and segments connecting these articulation points. Such an extraction provides a skeletal diagram of the patient.

There are techniques that allow the patient's anatomy to be identified and the exact position of their joints and limbs to be determined.

The extraction step can comprise the use of AlphaPose, YoLov, Video transformer network or any other system able to extract motion characteristic out of a 2D video, a method of estimating the pose and of determining the parameters of the skeleton.

For example, the AlphaPose method can be used in parallel with background removal. This method allows us to determine 17 keypoints representing the infant's posture. Extracting the keypoints then allows us to trace the skeleton.

According to an embodiment of the invention, the dividing line can be determined using an artificial intelligence algorithm or by drawing a straight line cutting the middle of a segment that connects the center of the shoulders and the center of the hips.

The dividing line can be a straight line or not, for example a line with one or several curves. Said dividing line can be placed exactly in the middle between the shoulders and the hips, but it can be more towards the shoulders or more towards the hips, depending for example on the age of the patient or of the curvature of the spine of the subject.

According to an embodiment of the invention, the step of determining a dividing line can comprise the following steps:
- retrieving the coordinates of the right shoulder, of the left shoulder, of the right hip and of the left hip,
- from these coordinates, tracing of an orthogonal reference having a vertical axis that passes through the center of the shoulders and through the center of the hips, and a horizontal axis being said dividing line,
- determining M intersection points distributed at equal distances along a segment to the right, parallel to the vertical axis, between the horizontal axis and the right shoulder,
- determining M intersection points distributed at equal distances along a segment to the left, parallel to the vertical axis, between the horizontal axis and the left shoulder,
- determining N intersection points distributed at equal distances along a segment to the right, parallel to the vertical axis, between the horizontal axis and the right hip,
- determining N intersection points distributed at equal distances along of a segment on the left, parallel to the vertical axis, between the horizontal axis and the left hip,
- production of M thoracic lines on the thoracic surface, these M lines passing respectively through the M intersection points on the right and the M intersection points on the left,
- production of N abdominal lines on the abdominal surface, these N lines passing respectively through the N intersection points on the right and the N intersection points on the left,
- determination of intersection points between the M+N lines and the contour,
- the step of calculating the areas further comprises a calculation of the areas delimited by the M+N lines so as to generate additional information on the thoracic movements and the abdominal movements.

M and N are two integers that can be the same or different.

The value of M and the value of N can for example be chosen in a range from 1 to infinity. A preferential value is 6.

Thus, from the skeleton, lines are drawn at the level of the thorax and at the level of the abdomen, in order to then be able to determine the points of intersection between the contour and said lines. Advantageously, these lines are drawn to take into account the patient's costal anatomy. This will make it possible to know if the patient is leaning to one side or the other. Indeed, when there is a lateral inclination of the spine, the ends of the ribs come together on one side and move apart on the other side.

According to an embodiment of the invention, the method can further comprise a step of identifying non-compliant positions of the patient by calculating for each image the position of the patient from the skeleton and by deleting the non-compliant images when predetermined thresholds are exceeded.

Indeed, when the patient is for example an infant, the latter can make movements, turn around or place a hand on the body during a video. This can prevent having a good visibility of the rib cage and the abdomen. In the case where an infant has an unsuitable position, this creates problems to detect the contour at the level of the thorax and the abdomen, which considerably impacts the quality of the data collected.

In order to sort the acquired data and to minimize the impact of bad postures on the results, non-compliant postures are identified by their difference with the "normal posture" measures and deleted. To delete the images displaying non-compliant postures, we rely on angle values between the different limbs to verify that there is good visibility of the torso-abdomen area and by the more represented.

In order to verify that the infant is lying on his back (and not turned on his side), we also rely on a ratio between the width of the shoulders and the width of the hips. This method is quick and easy to implement, since we already have the infant's skeleton in our possession. We have thus defined predetermined thresholds.

According to an embodiment of the invention, the predetermined thresholds can comprise at least one of the following conditions:
- a shoulder angle > 130°, eliminates frames or images where the arms are on the torso,
- an elbow angle identified in the skeleton > 110°, treats cases where the hands are placed on the stomach/chest,
- a hip angle < 300°, treats frames or images where the hips hide good visibility of the abdomen,
- a ratio between the shoulder width and the hip width < 10% of the median of the ratios, ensures that the infant is lying on his back,
- a thorax area and an abdomen area < 10% of the median of the areas, eliminates all abnormal values.

Preferably, the method can comprise a step of applying a linear interpolation to the images of the video so as to fill in the deleted images.

According to an embodiment of the invention, the method can further comprise a step of applying a low-pass filter to the thoracic and abdominal signals so as to eliminate noise.

Other types of filters can be applied to eliminate maximum noise.

According to an embodiment of the invention, the method can further comprise a step of removing linear trends.

This is a detrending step that means removing slow and non-respiratory drifts to improve signal quality. Polynomial Detrending Method can be used, which is specific for video-derived signals based on formula: $y \left(t\right) = {at}^{2} + bt + c$ where *a, b,* and *c* are coefficients estimated via least-squares regression. The residual signal after subtraction represents the detrended respiratory component.

The linear trends are removed so as to improve the quality of calculation in the next steps.

According to an embodiment of the invention, the method can further comprise a step of normalizing the thoracic and abdominal signals before calculating the relative continuous phase. As we deal with respiratory signals extracted from video, the normalization step is an advantageous step on the continuous relative phase calculations.. This type of signal is susceptible to variability due to several factors: (1) changes in the subject's distance to the camera, (2) differences in skin tone, and (3) motion noise. These variations can introduce several amplitude disparities unrelated to respiratory effort.

Percentile-based normalization can be used, which scales the signal using the 5th (P5) and 95th percentiles (P95) of its amplitude distribution: $x normalized \left(t\right) = \frac{x \left(t\right) - {P}_{5} \left(x\right)}{{P}_{95} \left(x\right) - {P}_{5} \left(x\right)}$

This method of normalization is more robust to outliers (unlike lin-max normalization) and focuses on the centrale rage of signal.

Advantageously, the thoracic and abdominal signals can be temporally segmented into several theoretical respiratory cycles of the patient.

According to an embodiment of the invention, the calculation of the relative continuous phase can comprise the following steps:
- transformation of each of the thoracic and abdominal signals into a complex signal of the form:
   *ξ*(*t*) *= x*(*t*) *+ iH*(*t*) , with *H(t)* the Hilbert transform of the original signal,
- calculation of phase angles of each signal according to the formula: $ϕ \left({t}_{i}\right) = arctan \left(\frac{H \left({t}_{i}\right)}{x \left({t}_{i}\right)}\right)$
- calculation of the relative continuous phase according to the formula: $crpt \left({t}_{i}\right) = {ϕ}_{1} \left({t}_{i}\right) - {ϕ}_{2} \left({t}_{i}\right) = arctan 2 \left(\frac{{H}_{1} \left({t}_{i}\right) {x}_{2} \left({t}_{i}\right) - {H}_{2} \left({t}_{i}\right) {x}_{1} \left({t}_{i}\right)}{{x}_{1} \left({t}_{i}\right) {x}_{2} \left({t}_{i}\right) + {H}_{1} \left({t}_{i}\right) {H}_{2} \left({t}_{i}\right)}\right)$ with *x*₁ he thoracic signal, x₂ the abdominal signal, *H*₁(*tᵢ*) the Hilbert transform of *x*₁ and *H*₂(*tᵢ*) the transform of *x*₂*.*

The relative continuous phase is a new signal representing the difference in phase angles between the two original signals. The goal in calculating the relative continuous phase is to study the synchronicity between the two signals, and thus determine whether the two signals are in phase, out of phase, etc.

According to another aspect of the invention, it is provided a device comprising:
a central processing unit (CPU);
a memory coupled to the CPU; and
a computer readable storage device coupled to the CPU, the storage device containing instructions that are executed by the CPU via the memory to implement the method of the present invention.

For example, said device can be a smartphone comprising a camera to acquire the video.

The invention makes it possible, from a video acquired with a consumer system such as a smartphone or webcam, to very precisely analyze the variations in the thoracic diameter and the abdominal diameter.

In such an embodiment, the remote server has hardware and software capabilities for implementing the invention from videos originating from various devices.

It is also provided a computer-readable storage medium comprising instructions which, when executed by a computer, cause the computer to carry out steps according the method of the present invention.

### Brief Description of the Drawings

Further advantages and characteristics of the invention will become apparent on examining the detailed description of an embodiment, which is in no way limitative, and the attached drawings, in which:
Figure 1 is a process flowchart illustrating different steps of the method according to the invention,
Figure 2 is a schematic view of a system according to the invention.
Figure 3 is a view of an image where the background has been deleted,
Figure 4 is a view of an image where a contour of the patient has been drawn,
Figure 5 is a schematic view of a skeleton,
Figure 6 is a schematic view of costal anatomy during lateral tilt,
Figure 7 are several schematic views illustrating the construction of lines on the skeleton,
Figure 8 is a view of an image illustrating the cutting of the thoracic surface and the abdominal surface,
Figure 9 are views illustrating a compliant image and two non-compliant images,
Figure 10 is a schematic view of a skeleton for a non-compliant image,
Figure 11 is a schematic view of a thoracic signal and an abdominal signal.

### Detailed Description

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

Hereinafter, the present invention will be described in detail by explaining exemplary embodiments of the invention with reference to the attached drawings.

In accordance with the preferred embodiment, the method and system according to the invention relate to the following materials and processes:

Embodiments herein can include computer-implemented methods, tangible non-transitory computer-readable mediums, and systems. The computer-implemented methods may be executed, for example, by a processor that receives instructions from a non-transitory computer-readable storage medium. Similarly, a system described herein may include at least one processor and memory, and the memory may be a non-transitory computer-readable storage medium. As used herein, a non-transitory computer-readable storage medium refers to any type of physical memory on which information or data readable by a processor may be stored. Examples include random access memory (RAM), read-only memory (ROM), volatile memory, nonvolatile memory, hard drives, CD ROMs, DVDs, flash drives, disks, and any other known physical storage medium. Singular terms, such as "memory" and "computer-readable storage medium," may additionally refer to multiple structures, such a plurality of memories and/or computer-readable storage mediums. As referred to herein, a "memory" may comprise any type of computer-readable storage medium unless otherwise specified. A computer-readable storage medium may store instructions for execution by a processor, including instructions for causing the processor to perform steps or stages consistent with an embodiment herein. Additionally, one or more computer-readable storage mediums may be utilized in implementing a computer-implemented method. The term "computer-readable storage medium" should be understood to include tangible items and exclude carrier waves and transient signals.

Although the invention is not limited thereto, a method applied to an infant will now be described. But the invention can be applied to adults in an identical manner.

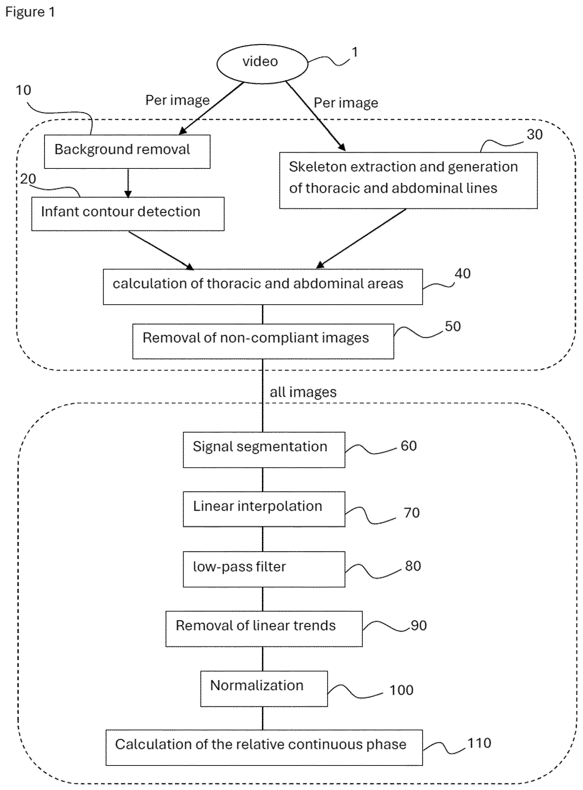

Figure 1 is a flowchart describing steps of a method according to the invention. Some steps can be performed in parallel or in series, in the defined order or in a different order that a person skilled in the art would be perfectly able to identify.

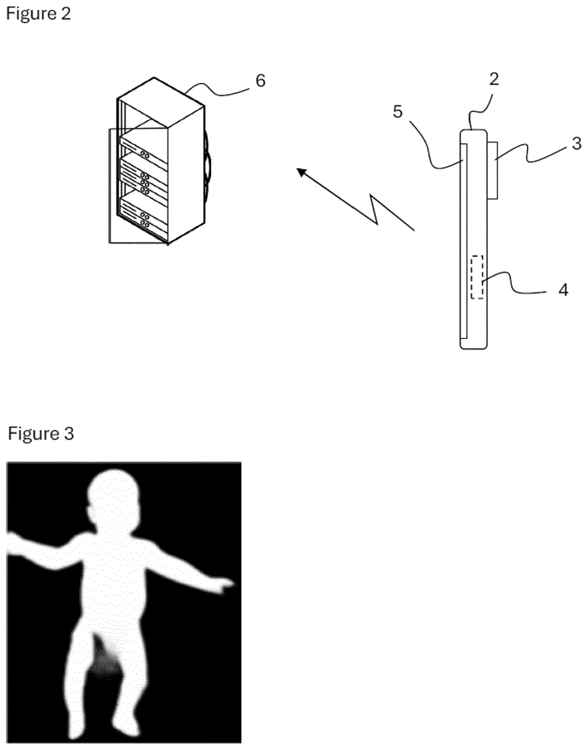

Figure 1 shows a video 1 acquired using a smartphone 2 as illustrated in Figure 2. This is a conventional smartphone, i.e. like those already known in the state of the art, equipped with a camera 3. The images acquired are for example those of an infant lying on its back. These images, forming the video 1, are stored in the smartphone 2 for internal or remote processing.

For internal processing, the processing unit 4 of the smartphone 2 is configured to implement the method according to the invention, i.e. the processing of the images of the video 1 so as to determine the level of synchronization between a thoracic signal and an abdominal signal. The result can be in the form of a text, a value, or an image displayed on the screen 5 of the smartphone 2. Other types of audio and/or video outputs can be envisaged.

For remote processing, the acquired video is transmitted to a remote server 6 for the implementation of the method according to the invention. Such an embodiment has the advantage of having a server with high processing power and learning possibilities with the reception of numerous videos.

In Figure 1, steps 10 to 50 are performed on each image. The following steps 60 to 110 are performed on signals from a set of images.

In step 10, a background removal is performed on each image of the video in order to subsequently identify the contour or outline of the infant. To remove the background, a U2Net model can be used, which allows the most salient regions of an image to be extracted.

Figure 3 shows an image of an infant for which the background is uniform, a black background.

In step 20 of Figure 1, the contour 21 of the infant is detected from the image without background. The detection is preferably carried out after having previously binarized the backgroundless image to facilitate the process.

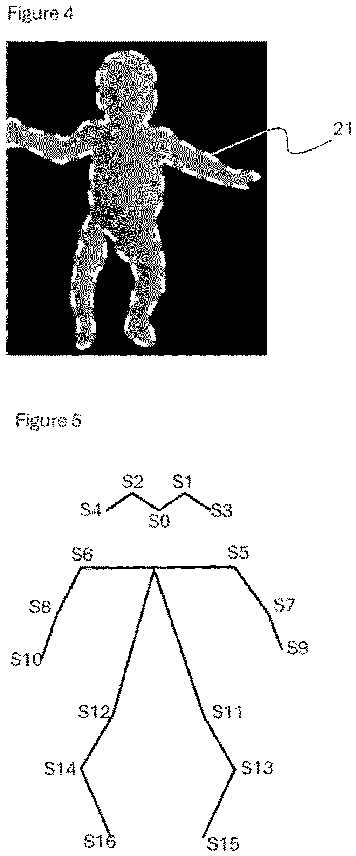

In step 30, an extraction of the infant skeleton is performed in parallel with the background removal. To do this, the AlphaPose pose estimation method is used, adapted for detection in infants in order to determine the 17 key points representing the infant's posture. The extraction of the keypoints then makes it possible to draw the skeleton. In Figure 5, we can distinguish the skeleton presenting 17 key points, from "S0" to "S16". These 17 key points are at least arranged on the infant's joints. Segments are arranged between two key points in order to draw the infant's skeleton. S5 and S6 are keypoints for the shoulders. S11 and S12 are keypoints for the hips. An example of adapted AlphaPose is disclosed in the following document: *"Improve Pose Estimation Model Performance with Unlabeled Data",* Adel Taleb et al., 2023 Congress in Computer Science, Computer Engineering, & Applied Computing (CSCE).

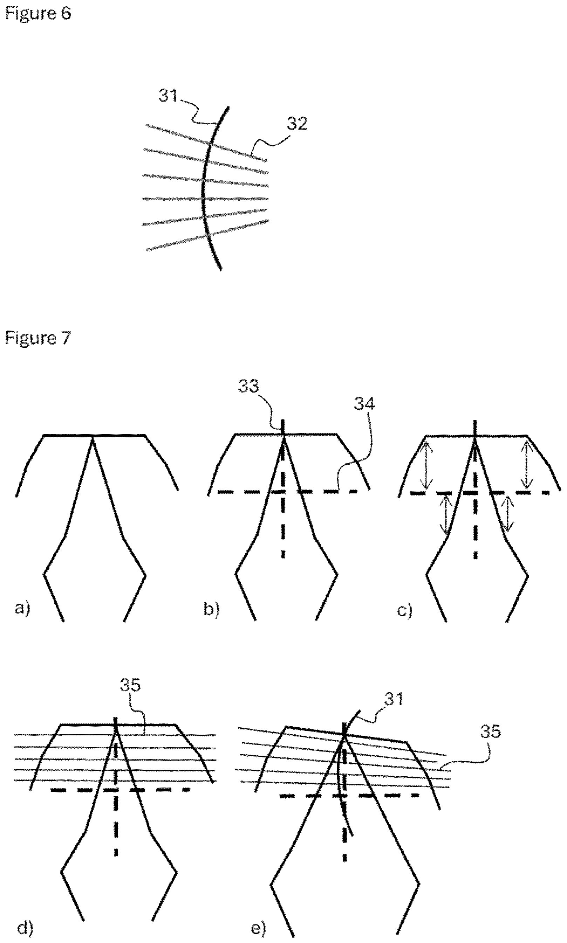

We then plan to define thoracic and abdominal lines from the skeleton. These lines are intended to take into account the costal anatomy. Thus, as illustrated in Figure 6, when there is a lateral tilt of the spine 31, the thoracic and abdominal lines, representing the ribs 32, behave as follows:
- concave side: the ribs 32 move closer to each other, which causes a reduction in the intercostal space at this level;
- convex side: the ribs 32 move away from each other, which increases the intercostal space on this side.

In order to respect this anatomy when drawing the thoracic and abdominal lines, the following operations are carried out:
- recovery of the coordinates of the right shoulder, the left shoulder, the right hip, and the left hip from the skeleton as shown in Figure 7a,
- from these coordinates, drawing of an orthogonal reference as shown in Figure 7b, the vertical axis 33 passing through the center of the shoulders and the center of the hips, the horizontal axis 34 being perpendicular to the vertical axis and arranged at an equal distance between the shoulders and the hips, this horizontal axis defining the dividing line between a thoracic surface and an abdominal surface,
- calculation of the distance between the horizontal axis of the reference and each shoulder, ditto for the hips as in Figure 7c,
- division of the distance on the left into 6 equal zones, same thing on the right, and drawing of the lines 35 (corresponding to ribs 32 of figure 6) as shown in Figure 7d.

Thus, as the distance between a shoulder and the horizontal axis decreases, the different cutting zones also decrease. As the distance increases, the zones increase. Figure 7e illustrates an example where the skeleton is tilted to the right (infant's left shoulder).

The intersection points between the thoracic and abdominal lines 35 and the contour 21 are then identified.

In step 40 (FIG. 1), the thoracic area and the abdominal area are then calculated.

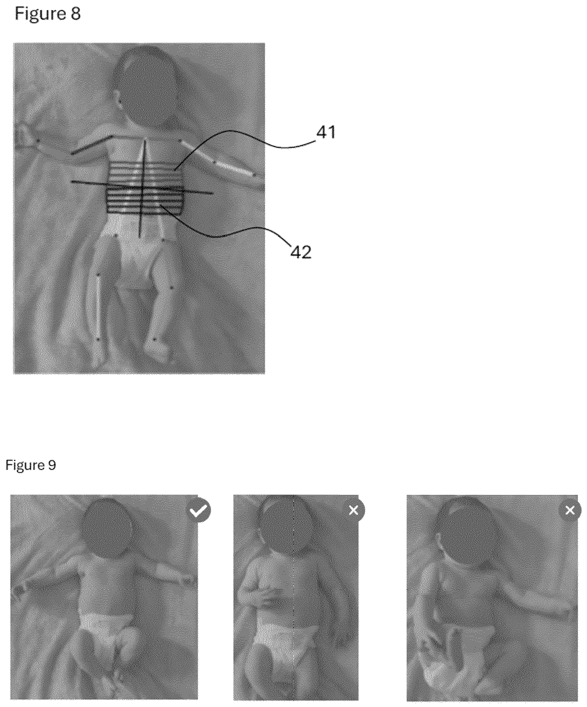

In FIG. 8, a thoracic surface 41 above the dividing line 34 and an abdominal surface 42 below the dividing line 34 are illustrated.

In step 50 of Figure 1, non-compliant images are deleted. Indeed, it was found that during several analyzed videos, in many cases, infants make movements, turn around or have their hands placed on their body, which prevents having a good visibility of the rib cage and abdomen. In the case where the infant has an unsuitable position, this creates problems for detecting the contour at the level of the thorax and abdomen, which considerably impacts the quality of the data collected.

In order to sort the acquired data and minimize the impact of bad postures, images with a non-compliant posture are identified and then deleted. Steps 40 and 50 can be performed in this order or in reverse order.

In Figure 9, the first image on the left is compliant because the thorax and abdomen are clearly visible. The infant is well positioned. The arms are spread apart. The legs are not too bent. The second image is non-compliant because the infant's right hand covers part of his torso, this prevents us from seeing the waist at this area. The last image on the right is also non-compliant because the infant is slightly turned and has bent knees.

To perform automatic detection of non-compliant images, we use angle values between the patient's different limbs to verify that there is good visibility of the torso-abdomen area. To verify that the infant is lying on his back (and not turned to the side), we use a ratio between the width of the shoulders and the width of the hips. This method is quick and easy to implement, since we already have the infant's skeleton in our possession.

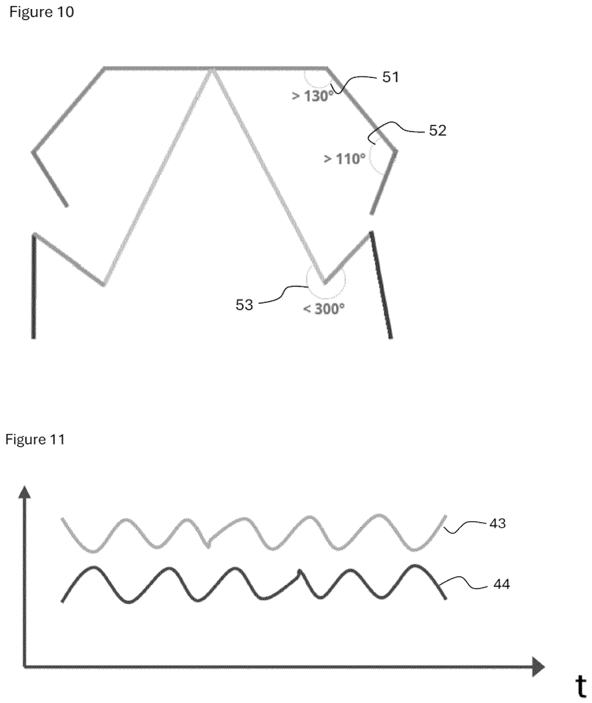

We have thus set the following conditions to determine whether an image is compliant or not:
- shoulder angle > 130°: in Figure 10, this is the internal angle 51 between the line connecting the two shoulders and the patient's arm; this condition makes it possible to eliminate frames where the arms are stuck to the torso,
- elbow angle > 110°: in Figure 10, this is the internal angle 52 between the arm and the forearm; this condition makes it possible to treat cases where the hands are placed on the stomach or torso,
- hip angle < 300°: in Figure 10, this is the external angle 53 between, on the one hand, a line connecting the center of the shoulders and a hip, and on the other hand the thigh; this condition allows to process the images of the video where the hips hide the good visibility of the abdomen,

- shoulder width/hip width ratio must not exceed 10% of the median of the ratios: this condition allows to ensure that the infant is lying on his back,
- torso area and abdomen area must not exceed 10% of the median of the areas: allows to remove all abnormal values.

When the image-by-image processing is finalized, two signals have been generated: signal 43 representing the evolution of the thoracic area 41, and signal 44 representing the evolution of the abdominal area 42.

Different signal processing methods will be applied in steps 60 to 110 in order to improve the quality of the results obtained and to facilitate their interpretation.

In order to subsequently use the Hilbert transform to identify the relative phase between the two signals 43 and 44, we plan in step 60 to segment the two signals beforehand. To segment these two signals, it is preferable to use physiological data. This is why we choose to use the respiratory rate, and to have a segment corresponding to a respiratory cycle. The respiratory rate of an infant is between 30 and 60 breaths per minute, which corresponds to one breath every 1 or 2 seconds. We therefore take an average of 45 breaths per minute. So, we determine that 1 breath is 1.33 seconds. If we consider that we have a video recorded at n = 30 fps, then we determine that our segment spans: $1.33 * n = 1.33 * 30 = 40 frames \left(images\right)$

The same calculation can be performed for different ages. The result can be saved as a parameter in the processing unit.

Knowing that we have deleted part of the images deemed non-compliant in step 50, we perform here in step 70 a linear interpolation in order to fill the gaps left. In step 80, we then apply a low-pass filter in order to attenuate the high frequencies corresponding to noise. We use the following formula, corresponding to a first-order low-pass filter: ${S}_{n} = {S}_{n - 1} + \frac{Te}{τ} \left({e}_{n - 1}-{S}_{n - 1}\right)$ with *eₙ* the original signal, *Sₙ* the filtered signal, *Te* the sampling period, τ correlated to the cut-off frequency *fc* with $τ = \frac{1}{2 π ∗ fc}$

In step 90, in order to improve the quality of our calculations thereafter, we remove the linear trends from our two signals.

In step 100, in order to have the same data scale for all the values collected, we normalize the data between -1 and 1. To do this, we use the following formula: ${X}_{norm} = \frac{X - Xmin}{Xmax - Xmin}$ with Xnorm the normalized signal, X the original signal, *Xmin* the minimum of the original signal and *Xmax* the maximum of the original signal.

It is also possible to remove linear trends from the signal by making a linear regression using a Python library (SciPy). First, a time vector is created to represent the position of each point in the signal. Then, a function from the library estimates the slope and intercept of the trend, which allows the reconstruction of the trend as a straight line. Finally, this trend is subtracted from the original signal leaving only the important signal variations over time.

In step 110, we calculate the relative continuous phase.

The continuous relative phase is a new signal representing the difference in the phase angles between the two original signals. The objective in calculating the continuous relative phase is to study the synchronicity between the two signals, and thus determine whether the two signals are in phase, in phase opposition, etc.

To calculate the continuous relative phase of the signal, we first transform our real signal into a complex signal of the form:
*ξ*(*t*) *= x(t) + iH*(*t*) , with *H(t)* the Hilbert transform of the original signal Once the Hilbert transform has been determined, the phase angles of the two signals can be calculated with the following formula: $ϕ \left({t}_{i}\right) = arctan \left(\frac{H \left({t}_{i}\right)}{x \left({t}_{i}\right)}\right)$

And finally, we determine the continuous relative phase using the following formula: $crpt \left({t}_{i}\right) = {ϕ}_{1} \left({t}_{i}\right) - {ϕ}_{2} \left({t}_{i}\right) = arctan 2 \left(\frac{{H}_{1} \left({t}_{i}\right) {x}_{2} \left({t}_{i}\right) - {H}_{2} \left({t}_{i}\right) {x}_{1} \left({t}_{i}\right)}{{x}_{1} \left({t}_{i}\right) {x}_{2} \left({t}_{i}\right) + {H}_{1} \left({t}_{i}\right) {H}_{2} \left({t}_{i}\right)}\right)$ with *x*₁ he thoracic signal, x₂ the abdominal signal, *H*₁(*tᵢ*) the Hilbert transform of *x*₁ and *H*₂(*tᵢ*) the transform of *x*₂*.*

From a video of a patient, it is thus possible to locate the patient's anatomy, determine the exact position of their joints and limbs, make a contour, examine the thoracic expansion and abdominal expansion, measure them, check their synchronization and characterize signs of struggle possibly associated with the patient's breathing.

Lower respiratory infections represent the leading cause of mortality in children under five years of age. Children, due to certain physiological characteristics, have an increased susceptibility to this type of infection. Indeed, the reduced number of pulmonary alveoli, low compliance of the thorax, the smaller number of endurance fibers, and small-caliber airways, represent some of the characteristics favoring the onset of respiratory problems.

Early detection of respiratory distress according to the present invention is a major challenge to treat these pathologies as quickly and effectively as possible and maximize the chances of recovery of young patients.

Numerous variations and modifications will become apparent to those skilled in the art once the above disclosure is fully appreciated.

## Claims

1. Image processing method for detecting synchronization between thoracic movements and abdominal movements of a patient from a video displaying at least the thorax and abdomen of the patient, this method being implemented by a processing unit and comprising the following steps:
- for each image of the video:
- detection of the patient's contour,
- extraction of a skeleton of the patient comprising at least the coordinates of the left shoulder, the right shoulder, the left hip and the right hip,
- determination of a dividing line between the shoulders and the hips; all or part of an upper surface delimited by the dividing line, the contour and an upper line passing through the shoulders constitutes a thoracic surface; all or part of a lower surface delimited by the dividing line, the contour and a lower line passing through the hips constitutes an abdominal surface,
- calculation of an area of the thoracic surface and an area of the abdominal surface,
- for a series of images of the video:
- determination of a thoracic signal and an abdominal signal representing respectively the variation of the area of the thoracic surface and the variation of the area of the abdominal surface, and
- calculation of a relative continuous phase between the thoracic signal and the abdominal signal so as to determine the level of synchronization between the thoracic surface and the abdominal surface.

2. Method according to claim 1, **characterized in that** it comprises a step of removing the background before the step of detecting the contour of the patient.

3. Method according to claim 1 or 2, **characterized in that** the extraction step consists in extracting a set of parameters of the skeleton, said parameters comprising articulation points and segments connecting these articulation points.

4. Method according to claim 3, **characterized in that** the extraction step comprises the use of Alphapose, a method of estimating the pose and of determining the parameters of the skeleton.

5. Method according to any one of the preceding claims, **characterized in that** the dividing line is determined using an artificial intelligence algorithm or by drawing a straight line cutting the middle of a segment that connects the center of the shoulders and the center of the hips.

6. Method according to any one of the preceding claims, **characterized in that** the step of determining a dividing line comprises the following steps:
- retrieving the coordinates of the right shoulder, of the left shoulder, of the right hip and of the left hip,
- from these coordinates, tracing of an orthogonal reference having a vertical axis that passes through the center of the shoulders and through the center of the hips, and a horizontal axis being said dividing line,
- determining M intersection points distributed at equal distances along a segment to the right, parallel to the vertical axis, between the horizontal axis and the right shoulder,
- determining M intersection points distributed at equal distances along a segment to the left, parallel to the vertical axis, between the horizontal axis and the left shoulder,
- determining N intersection points distributed at equal distances along a segment to the right, parallel to the vertical axis, between the horizontal axis and the right hip,
- determining N intersection points distributed at equal distances along of a segment on the left, parallel to the vertical axis, between the horizontal axis and the left hip,
- production of M thoracic lines on the thoracic surface, these M lines passing respectively through the M intersection points on the right and the M intersection points on the left,
- production of N abdominal lines on the abdominal surface, these N lines passing respectively through the N intersection points on the right and the N intersection points on the left,
- determination of intersection points between the M+N lines and the contour,
- the step of calculating the areas further comprises a calculation of the areas delimited by the M+N lines so as to generate additional information on the thoracic movements and the abdominal movements.

7. Method according to any one of the preceding claims, **characterized in that** it further comprises a step of identifying non-compliant positions of the patient by calculating for each image the position of the patient from the skeleton and by deleting the non-compliant images when predetermined thresholds are exceeded.

8. Method according to claim 7, **characterized in that** the predetermined thresholds comprise at least one of the following conditions:
- a shoulder angle > 130°,
- an elbow angle identified in the skeleton > 110°,
- a hip angle < 300°,
- a ratio between the shoulder width and the hip width < 10% of the median of the ratios,
- a thorax area and an abdomen area < 10% of the median of the areas.

9. Method according to claim 7 or 8, **characterized in that** it comprises a step of applying a linear interpolation to the images of the video so as to fill in the deleted images.

10. Method according to any one of the preceding claims, **characterized in that** it further comprises a step of applying a low-pass filter to the thoracic and abdominal signals so as to eliminate noise.

11. Method according to any one of the preceding claims, **characterized in that** it further comprises a step of removing linear trends.

12. Method according to any one of the preceding claims, **characterized in that** it further comprises a step of normalizing the thoracic and abdominal signals before calculating the relative continuous phase.

13. Method according to any one of the preceding claims, **characterized in that** the thoracic and abdominal signals are temporally segmented into several theoretical respiratory cycles of the patient.

14. Method according to claim 13, **characterized in that** the calculation of the relative continuous phase comprises the following steps:
- transformation of each of the thoracic and abdominal signals into a complex signal of the form:
*ξ*(*t*) *= x*(*t*) *+ iH*(*t*) , with *H(t)* the Hilbert transform of the original signal,
- calculation of phase angles of each signal according to the formula: $ϕ \left({t}_{i}\right) = arctan \left(\frac{H \left({t}_{i}\right)}{x \left({t}_{i}\right)}\right)$
- calculation of the relative continuous phase according to the formula: $crpt \left({t}_{i}\right) = {ϕ}_{1} \left({t}_{i}\right) - {ϕ}_{2} \left({t}_{i}\right) = arctan 2 \left(\frac{{H}_{1} \left({t}_{i}\right) {x}_{2} \left({t}_{i}\right) - {H}_{2} \left({t}_{i}\right) {x}_{1} \left({t}_{i}\right)}{{x}_{1} \left({t}_{i}\right) {x}_{2} \left({t}_{i}\right) + {H}_{1} \left({t}_{i}\right) {H}_{2} \left({t}_{i}\right)}\right)$ with *x*₁ he thoracic signal, x₂ the abdominal signal, *H*₁(*tᵢ*) the Hilbert transform of *x*₁ and *H*₂(*tᵢ*) the transform of *x*₂*.*

15. A device comprising:
a central processing unit (CPU);
a memory coupled to the CPU; and
a computer readable storage device coupled to the CPU, the storage device containing instructions that are executed by the CPU via the memory to implement the method according to any of claims 1 to 14.
